# EUROPEAN PATENT SPECIFICATION

(11) **EP 3 135 163 B1**
(45) Date of publication and mention of the grant of the patent: **21.07.2021**
(21) Application number: 16183779.4
(22) Date of filing: 11.08.2016
(51) Int. Cl.: A47J 37/07

(54) **ELECTRIC MULTIPURPOSE APPARATUS FOR COOKING FOOD**
ELEKTRISCHE MEHRZWECKVORRICHTUNG ZUM KOCHEN VON NAHRUNGSMITTELN
APPAREIL POLYVALENT ÉLECTRIQUE POUR LA CUISSON D'ALIMENTS

(30) Priority: 24.08.2015 FI 20154152 U
(43) Date of publication of application: 01.03.2017
(73) Proprietor: Pisla Oy, 44500 Viitasaari (FI)
(72) Inventor: Qvist, Kai, 00810 Helsinki (FI); Räsänen, Tapani, 57120 Rahula (FI)
(74) Representative: Heinonen & Co

(56) References cited:
- EP-A2- 1 941 818
- DE-U1-202012 003 548
- US-A1- 2008 116 193

## Description

### TECHNICAL FIELD

The invention relates to an electric multipurpose apparatus for cooking food. In particular, the invention relates to an electric multipurpose apparatus that is convertible into a smoke-free barbecue grill, oven, open-fire roaster and smoker.

### BACKGROUND OF THE INVENTION

People have many kinds of devices, such as barbecue grills and smokers, in their summer kitchens. It can be hard to use and clean several devices, and a lot of space is needed for storing these devices. Besides, it is an extra expense to buy such a great variety of devices.

An electric barbecue grill provides a quick and effective way of cooking food by barbecuing but the grease dripping onto the resistance element makes it difficult to clean the barbecue grill. Besides, the grease dripping onto the hot resistance element involves a risk of flare-up, and, at the very least, the barbecue grill produces smoke and fume, which is detrimental and may have a negative effect on the taste of food being cooked.

Instead, adding a grease drip tray is between the grid carrying the food to be cooked and the resistance element prevents the food from being cooked by direct radiant heat, and, converts the barbecue grill, more or less, into an oven. This is not always desirable because food cooked in an oven is not the same thing as food cooked in a barbecue grill.

EP 1941818 A2 presents a barbecue grill that can be arranged in a grill position, and in a broil position. In the broil position, the heating element is raised to stand from its one side, and the food to be cooked is radiated by the heating element standing in a upright position aside of the food to be cooked.

### SUMMARY OF THE INVENTION

The objective of the present invention is to provide a solution eliminating or alleviating the above-mentioned drawbacks. In particular, the invention aims at solving how to easily change the operation of the apparatus.

The electric multipurpose apparatus for cooking food according to the invention is characterized in what is set forth in the independent claim 1.

An electric multipurpose apparatus for cooking food according to an embodiment of the present invention comprises at least an openable casing, an electrical resistance element provided on the casing and carrier means for canying the food inside the casing. The multipurpose apparatus also comprises, for changing the operation of the apparatus, means for changing the position of the electrical resistance element with respect to the food to be cooked.

The operation of the apparatus is easy to change by positioning the electrical resistance element above or below the food to be cooked. When used as a barbecue grill or an open-fire roaster, the resistance element can be positioned above the food to be cooked, allowing direct radiant heat, effectively cooking the food, to be used. Then, the grease dripping from the food does not end up on the resistance element, involving a risk of flare-up. When the resistance element is positioned below the food to be cooked, the apparatus serves as a smoker, by heating wood chips on a wood chip pan, or, as an oven if a grease drip tray is provided between the grid and the resistance element.

In an embodiment, the resistance element is obliquely positioned above or below the food to be cooked. Now, it is preferable that the food to be cooked also is positioned in an oblique angle. In these embodiments the carrier means can be provided with means for fastening the food to be cooked.

In a preferred embodiment, the resistance element can be fixed in a desired location on the casing, such as below or above the food to be cooked, and, in another embodiment, the casing comprises apertures provided in the end walls of the casing for fixing the electrical resistance element in the desired location on the casing. In still another embodiment, it is possible to cover those of the apertures that are not in use. Depending on the embodiment, the apertures that are not in use can be covered by a flap that can be pulled over the aperture, or, by a fastening flange that can be fastened onto the aperture. In these embodiments, the position of the electrical resistance element with respect to the food to be cooked can be changed by moving the electrical resistance element to a position above or below the food to be cooked. This allows the food to be evenly cooked without an air flow from the apertures.

According to another embodiment, the means for changing the operation of the apparatus comprise supporting means provided on the apparatus, such as supporting legs, allowing the casing to be put on a surface, with the electrical resistance element in a desired location with respect to the food to be cooked.

In an embodiment, the supporting legs are provided to extend to both sides of the casing, allowing the casing to be put on the surface, supported by the supporting legs, in a first position, with the resistance element above the food to be cooked, and, in a second position, with the resistance element below the food to be cooked. In other words, the position of the electrical resistance element can be changed by turning the casing, in its first position of use, 180 degrees, i.e. upside down, to its second position of use.

In another embodiment, the supporting legs are removably attached to the casing to allow the position of the legs to be changed with respect to the casing. This present embodiment allows other positions of use, in addition to the ones with the resistance element above the food to be cooked or below the food to be cooked.

The operation of the apparatus of the present invention can also be changed in some other way, such as by putting the casing in a desired position on a separate supporting member lying on a surface, the resistance element provided on the casing thus being located, in this position of the casing, above, below, or obliquely with respect to, the food to be cooked.

In still another embodiment, the orientation of the carrier means, comprising a cooking grid for carrying food, a grease drip tray for collecting grease and/or a wood chip pan, inside the casing can be selected to match the position of use of the casing. The present embodiments allow the operation of the apparatus of the invention to be changed quickly by changing the orientation of casing with respect to the ground, for example, by turning the apparatus, or the casing, 180 degrees, and, possibly, by changing the order and/or orientation of the grid, and of any other carrier means, inside the casing, without having to remove the electrical resistance element and to fix it in some other location on the casing.

In still another embodiment, the casing can be opened up, at the middle, into two halves, connected to each other by connecting means, such as by a hinge/hinges, that allow opening. In another embodiment, at least one of the ends of the casing is openable.

The utility of the electric multipurpose apparatus of the present invention arises from a number of facts. The apparatus is easy to manufacture, and, it is easy for a user to change the operation of the apparatus from operation as a smoker/oven to operation as a barbecue grill/open-fire roaster. In addition, the apparatus can be easy to use and clean. The apparatus may allow food to be easily cooked without any smoke or fume caused by grease dripping onto the electrical resistance element.

In this application, the term "orientation" refers to the order of the members with respect to a surface, in a position of use, and, to which side of the members faces upwards.

In this application, the terms "upper side" and "lower side" refer to directions, while the casing rests on a surface, in a position of use.

### BRIEF DESCRIPTION OF THE FIGURES

In the following, preferred embodiments of the invention will be explained in more detail with reference to the accompanying drawings where
Figure 1 is a perspective view of a multipurpose apparatus according to an embodiment of the invention,
Figure 2 shows the multipurpose apparatus of Figure 1 in its opened state,
Figure 3 shows the multipurpose apparatus of Figure 1 in use for another purpose,
Figure 4 shows the multipurpose apparatus of Figure 3 in its opened state,
Figure 5 is an end view of the multipurpose apparatus according to another embodiment of the invention, in a first position of use,
Figure 6 is an end view of the multipurpose apparatus of Figure 5, in a second position of use.

### DETAILED DESCRIPTION OF THE EMBODIMENTS

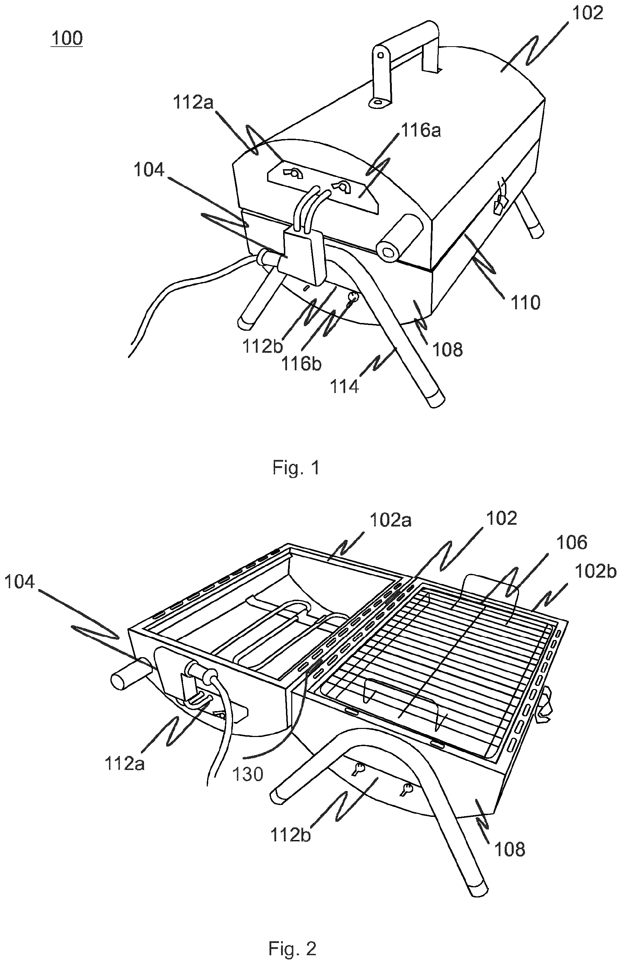

Figure 1 is a perspective view of a multipurpose apparatus according to an embodiment of the present invention. The electric multipurpose apparatus 100 for cooking food according to the present invention comprises a casing 102, an electrical resistance element 104 provided on the casing 102 and carrier means for carrying the food inside the casing 102.

Typically, the casing 102 is box-shaped, comprising end walls 108 and a middle part 110. The shape does not have to be a rectangle, but, the parts, the lid part, for example, can be rounded in shape. Usually, the casing also has supporting legs 114 to support the casing in a position of use on a surface.

In the embodiment shown in Figure 2, the casing 102 can be opened up into two halves, the halves forming a lid part 102a and a bottom part 102b, respectively, connected to each other by connecting means, such as a hinge, or, hinges, that allow the opening up. Usually, the halves 102a and 102b are approximately equal in size. In another embodiment (not shown in the figure), the at least one of the ends of the casing is openable. In this embodiment, the entire end wall is, as a rule, removable, and the carrier means can be taken out of the casing.

The casing 102 also comprises carrier means 106, such as a cooking grid for carrying food, a grease drip tray for collecting grease and/or a wood chip pan, depending on the embodiment. The carrier means 106 are usually mounted on carrier guides provided in the middle part of the casing. The carrier means can also comprise means, such as a clip/clips, for fastening the food to the carrier means.

In the embodiment shown in Figures 1 and 2, the electrical resistance element 104 can be inserted into apertures 112a, 112b provided in the casing (covered by fastening flanges in Figures 1 and 2).The apertures are provided in each end wall 108, at the same height, and, while selecting the operation of the multipurpose apparatus, the electrical resistance element 104 is positioned in the apertures 112a, or, in the apertures 112b of the casing, above or below the carrier means, respectively. Those of the apertures that are not in use can be covered by any known means, such as a flap, that can be pulled over the aperture, or, in the embodiment shown in Figures 1 and 2, by a separate fastening flange 116 a and 116b. The fastening flange 116a is connected to the electrical resistance element 104, resulting in that, as the electrical resistance element 104 is moved, the fastening flange 116a as well is moved and fixed in the aperture of the other end wall. The fastening flange can be fixed onto the aperture by any appropriate means, such as a screw and wingnut. Covering the apertures that are not in use ensures an even heat inside the multipurpose apparatus. The cable used by the electrical resistance element is preferably coupled to the other end of the resistance element and is possibly removable when the position of the electrical resistance element is changed.

Inserting the electrical resistance element 104 into the apertures 112a above the carrier means 106 changes the operation of the apparatus to a barbecue grill (Figures 1 and 2). This allows direct radiant heat to be used for cooking the food, without running a risk of flare-up, or, fume, caused by grease drippings. In this case, a grease drip tray can be provided below the cooking grid to collect the grease and fluids, which makes it easier to clean the apparatus.

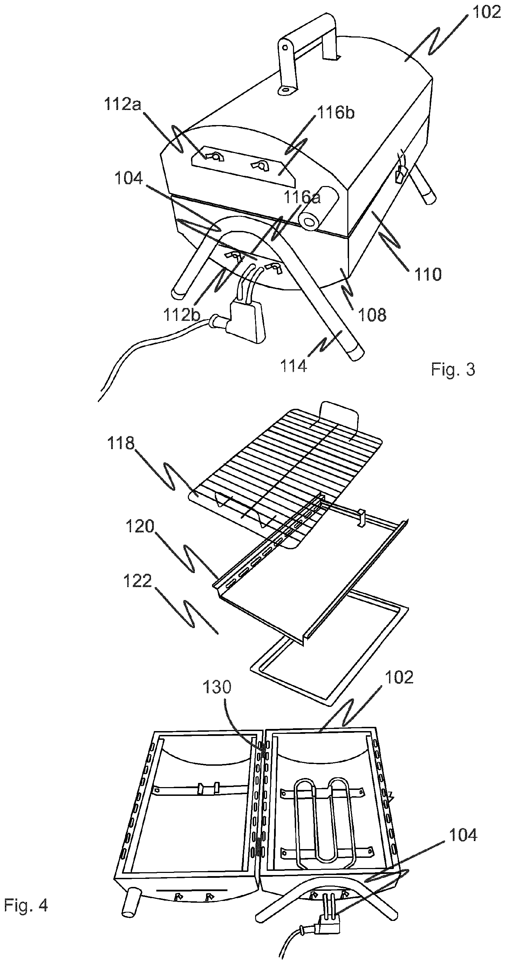

In Figures 3 and 4, the electrical resistance element 104 is inserted into the apertures 112b below the carrier means 106 (covered by a fastening flange 116a in Figure 3), allowing the operation of the multipurpose apparatus of the present invention to be changed to an oven or a smoker. Now, in addition to a cooking grid 118, a grease drip tray 120 for collecting grease, and a wood chip pan 122, are selected as the carrier means. The grease drip tray 120, and/or the wood chip pan 122, can be provided with suitable perforations for smoke and heat circulation.

The operation of the apparatus of the present invention can also be changed by means of supporting means provided on the apparatus. The supporting means, such supporting legs, can be provided on the apparatus to allow the casing to be put on a surface, with the electrical resistance element in a desired location with respect to the food to be cooked.

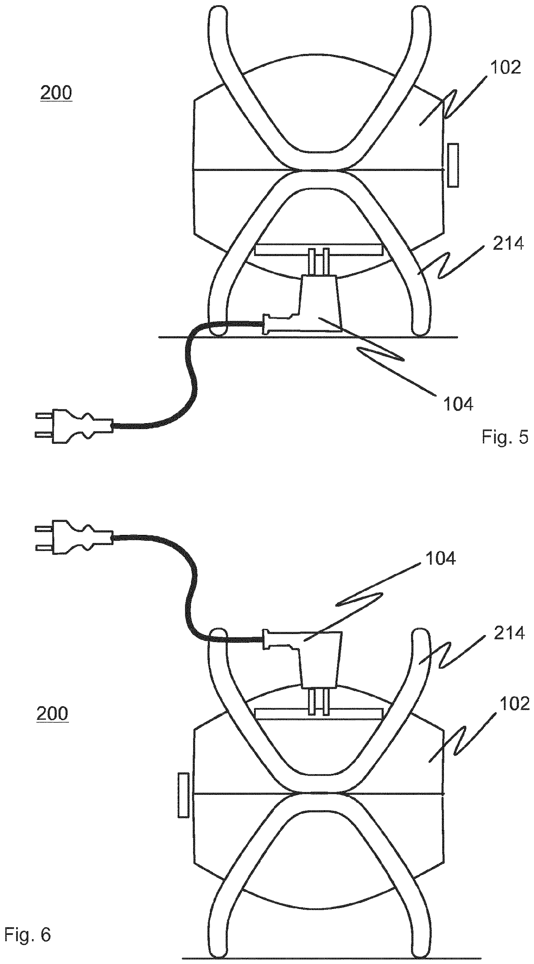

In the embodiment shown in Figures 5 and 6, the electric multipurpose apparatus 200 has a design where the supporting means comprise supporting legs 214. The supporting legs 214 are provided to extend to both sides of the casing 102 to allow the casing 102 to be put on a surface, supported by the supporting legs, in a first position (Figure 5), with the resistance element 104 above the food to be cooked, or, in a second position (Figure 6), with the resistance element 104 below the food to be cooked. Thus, the apparatus has a first position of use (Figure 5) and a second position of use (Figure 6). The positions of use are swapped by turning the casing, which is in one position of use, upside down, to the other position of use. The supporting legs provided on the casing can be formed to extend, from an end wall of the casing, over an equal distance above and below the casing. Besides, the legs do not have to be fixed to the end wall but they can be fixed somewhere else, such as to the lid or the bottom of the casing.

In another embodiment, the supporting legs 214 are removably attached to the casing to allow the position of the legs to be changed with respect to the casing. This embodiment does not require the supporting legs to be completely removed, but the position of the supporting legs can be changed by loosening the supporting legs for the period of the position change. The supporting legs can be fixed to the casing by means of any conventional means, such as a wingnut and screws fitting into it.

According to still another embodiment, the supporting means comprise a supporting member to be put on a surface and capable of receiving the casing, in a desired position, on top of itself. In this embodiment, the casing can be provided with grooves or recesses that match their respective projections provided on the supporting means, in order to securely keep the casing in place on the surface.

In an embodiment related to Figures 5 and 6, the carrier means are made symmetrical to allow the orientation of the carrier means inside the casing, when there has been a change of position of use, to be selected to match the position of use of the casing. In other words, it is possible to change the order of the carrier means inside the casing, and, to reverse the position of some of the carrier means, such as the wood chip pan, and/or the grease drip tray. This is preferable for carrier means provided with a recess, for example.

The above only described a few embodiments of the solution according to the invention. Naturally, the teachings, such as the details of implementation and ways of application, of the invention can be modified within the scope defined by the claims.

## Claims

1. An electric multipurpose apparatus (100, 200) for cooking food, comprising at least an openable casing (102), an electrical resistance element (104) provided on the casing (102) and carrier means (106) for carrying food inside the casing (102), **characterized in that** the apparatus comprises means for changing the position of the electrical resistance element (104) with respect to the food to be cooked, in order to change the operation of the apparatus, wherein the first position of said electrical resistance element (104) is above of the food to be cooked and the second position is substantially 180 degrees from said first position, below the food to be cooked.

2. A multipurpose apparatus (100) as defined in Claim 1, **characterized in that** said means for changing the operation of the apparatus comprise apertures (112a, 112b) provided in the end walls (108) of the casing, for fixing the electrical resistance element (104) to the casing, in a desired location with respect to the food being cooked, (102), such as above or below the food.

3. A multipurpose apparatus (100) as defined in Claim 2, **characterized in that** at least those of said apertures that are not in use can be covered by a flap that can be pulled over the aperture, or, by a fastening flange (116a, 116b) that can be fastened onto the aperture.

4. A multipurpose apparatus (200) as defined in Claim 1, **characterized in that** said means for changing the operation of the apparatus comprise supporting means, such as supporting legs (214), provided on the apparatus, to allow the casing (102) to be put, supported by them, on a surface, with the electrical resistance element (104) in a desired position (102) with respect to the food to be cooked.

5. A multipurpose apparatus (200) as defined in Claim 4, **characterized in that** said supporting means are supporting legs (214), which are provided to extend to both sides of the casing (102), allowing the casing (102) to be put on the surface, supported by the supporting legs, in the first position, or, in the second position, with the resistance element (104) below the food to be cooked.

6. A multipurpose apparatus (200) as defined in Claim 4, **characterized in that** said supporting means are legs (214), which are removably attached to the casing to allow the position of the supporting legs to be changed with respect to the casing.

7. A multipurpose apparatus (200) as defined in any of Claims 4 to 6, **characterized in that** the orientation of the carrier means (106), comprising a cooking grid for carrying food, a grease drip tray for collecting grease, and/or a wood chip pan, inside the casing (102) can be selected to match the position of use of the casing (102).

8. A multipurpose apparatus (100, 200) as defined in any of the preceding claims, **characterized in that** the casing (102) comprises two halves connected to each other by a hinge/hinges (130) to allow the casing to be opened up, at the middle, into these two halves.

9. A multipurpose apparatus (200) as defined in any of Claims 4 to 5, **characterized in that** at least one of the ends of the casing is openable.

## Patentansprüche

1. Elektrische Mehrzweckvorrichtung (100, 200) zum Kochen von Lebensmitteln, umfassend wenigstens ein zu öffnendes Gehäuse (102), ein elektrisches Widerstandselement (104), das an dem Gehäuse (102) vorgesehen ist, und eine Trägereinrichtung (106) zum Tragen von Lebensmitteln innerhalb des Gehäuses (102), **dadurch gekennzeichnet, dass** die Vorrichtung Mittel zum Verändern der Position des elektrischen Widerstandselements (104) in Bezug auf das zu kochende Lebensmittel umfasst, um den Betrieb der Vorrichtung zu verändern, wobei sich die erste Position des elektrischen Widerstandselements (104) oberhalb des zu kochenden Lebensmittels befindet und wobei sich die zweite Position im Wesentlichen 180 Grad von der ersten Position unterhalb des zu kochenden Lebensmittels befindet.

2. Mehrzweckvorrichtung (100) nach Anspruch 1, **dadurch gekennzeichnet, dass** das Mittel zum Verändern des Betriebs der Vorrichtung Öffnungen (112a, 112b) umfasst, die in den Stirnwänden (108) des Gehäuses vorgesehen sind, um das elektrische Widerstandselement (104) an dem Gehäuse an einer gewünschten Stelle in Bezug auf das zu kochende Lebensmittel (102), nämlich oberhalb oder unterhalb des Lebensmittels, zu befestigen.

3. Mehrzweckvorrichtung (100) nach Anspruch 2, **dadurch gekennzeichnet, dass** wenigstens diejenigen der Öffnungen, die nicht verwendet werden, durch eine Klappe, die über die Öffnung gezogen werden kann, oder durch einen Befestigungsflansch (116a, 116b), der an der Öffnung befestigt werden kann, abgedeckt werden können.

4. Mehrzweckvorrichtung (200) nach Anspruch 1, **gekennzeichnet dadurch, dass** die Mittel zum Ändern des Betriebs der Vorrichtung Stützmittel wie Stützbeine (214) umfassen, die an der Vorrichtung vorgesehen sind, um es zu ermöglichen, dass das Gehäuse (102), das von ihnen getragen ist, auf eine Oberfläche gestellt wird, wobei sich das elektrische Widerstandselement (104) in einer gewünschten Position (102) in Bezug auf das zu kochende Lebensmittel befindet.

5. Mehrzweckvorrichtung (200) nach Anspruch 4, **dadurch gekennzeichnet, dass** die Stützmittel Stützbeine (214) sind, die vorgesehen sind, sich zu beiden Seiten des Gehäuses (102) zu erstrecken, wodurch es ermöglicht wird, dass das Gehäuse (102) gestützt von den Stützbeinen auf die Oberfläche in der ersten Position oder in der zweiten Position mit dem Widerstandselement (104) unter dem zu kochenden Lebensmittel gestellt werden kann.

6. Mehrzweckvorrichtung (200) nach Anspruch 4, **dadurch gekennzeichnet, dass** die Stützmittel Beine (214) sind, die entfernbar an dem Gehäuse angebracht sind, um zu ermöglichen, dass die Position der Stützbeine in Bezug auf das Gehäuse verändert wird.

7. Mehrzweckvorrichtung (200) nach einem beliebigen der Ansprüche 4 bis 6, **dadurch gekennzeichnet, dass** die Ausrichtung der Trägermittel (106), die ein Kochgitter zum Tragen von Lebensmitteln, eine Fetttropfschale zum Sammeln von Fett und/oder eine Holzspänepfanne umfassen, innerhalb des Gehäuses (102) ausgewählt werden kann, um der Einsatzposition des Gehäuses (102) zu entsprechen.

8. Mehrzweckvorrichtung (100, 200) nach einem der vorhergehenden Ansprüche, **dadurch gekennzeichnet, dass** das Gehäuse (102) zwei Hälften umfasst, die durch (ein) Scharnier/Scharniere (130) miteinander verbunden sind, um das Öffnen des Gehäuses in der Mitte in diese beiden Hälften zu ermöglichen.

9. Mehrzweckvorrichtung (200) nach einem der Ansprüche 4 bis 5, **dadurch gekennzeichnet, dass** wenigstens eines der Enden des Gehäuses geöffnet werden kann.

## Revendications

1. Appareil électrique polyvalent (100, 200) pour cuire des aliments, comprenant au moins un boîtier ouvrable (102), un élément de résistance électrique (104) prévu sur le boîtier (102) et des moyens de transport (106) pour transporter des aliments à l'intérieur du boîtier (102), **caractérisé en ce que** l'appareil comprend des moyens pour changer la position de l'élément de résistance électrique (104) par rapport à l'aliment à cuire, afin de modifier le fonctionnement de l'appareil, dans lequel la première position dudit élément de résistance électrique (104) est au-dessus de l'aliment à cuire et la deuxième position est sensiblement à 180 degrés de ladite première position, en dessous de l'aliment à cuire.

2. Appareil polyvalent (100) selon la revendication 1, **caractérisé en ce que** lesdits moyens pour modifier le fonctionnement de l'appareil comprennent des ouvertures (112a, 112b) prévues dans les parois d'extrémité (108) du boîtier, pour fixer l'élément de résistance (104) au boîtier, à un emplacement souhaité par rapport à l'aliment en cours de cuisson, (102), comme au-dessus ou au-dessous de l'aliment.

3. Appareil polyvalent (100) selon la revendication 2, **caractérisé en ce qu'**au moins celles desdites ouvertures qui ne sont pas utilisées peuvent être couvertes par un rabat qui peut être tiré sur l'ouverture, ou, par une bride de fixation (116a, 116b) qui peut être fixée sur l'ouverture.

4. Appareil polyvalent (200) selon la revendication 1, **caractérisé en ce que** lesdits moyens pour modifier le fonctionnement de l'appareil comprennent des moyens de support, tels que des pieds de support (214), prévus sur l'appareil, pour permettre de placer le boîtier (102), supporté par ces derniers, sur une surface, avec l'élément de résistance électrique (104) dans une position souhaitée (102) par rapport à l'aliment à cuire.

5. Appareil polyvalent (200) selon la revendication 4, **caractérisé en ce que** lesdits moyens de support sont des pieds de support (214), qui sont prévus pour s'étendre des deux côtés du boîtier (102), en permettant au boîtier (102) d'être placé sur la surface, supporté par les pieds de support, dans la première position, ou, dans la deuxième position, avec l'élément de résistance (104) sous l'aliment à cuire.

6. Appareil polyvalent (200) selon la revendication 4, **caractérisé en ce que** lesdits moyens de support sont des pieds (214), qui sont fixés de manière amovible au boîtier pour permettre de modifier la position des pieds de support par rapport au boîtier.

7. Appareil polyvalent (200) tel que défini dans une quelconque des revendications 4 à 6, **caractérisé en ce que** l'orientation des moyens de support (106), comprenant une grille de cuisson pour transporter les aliments, un bac de récupération des graisses pour récupérer les graisses, et/ou un bac à copeaux de bois, à l'intérieur du boîtier (102), peut être sélectionné pour correspondre à la position d'utilisation du boîtier (102).

8. Appareil polyvalent (100, 200) selon une quelconque des revendications précédentes, **caractérisé en ce que** le boîtier (102) comprend deux moitiés reliées l'une à l'autre par une (des) charnière/charnière(s) (130) pour permettre l'ouverture du boîtier, au milieu, dans ces deux moitiés.

9. Appareil polyvalent (200) tel que défini dans une quelconque des revendications 4 à 5, **caractérisé en ce qu'**au moins une des extrémités du boîtier est ouvrable.
